(19) Europäisches Patentamt

European Patent Office

Office européen des brevets

(11) Veröffentlichungsnummer: **0 255 675 B1**

(12) **EUROPÄISCHE PATENTSCHRIFT**

(45) Veröffentlichungstag der Patentschrift: **13.05.92**

(21) Anmeldenummer: **87110829.6**

(22) Anmeldetag: **25.07.87**

(51) Int. Cl.⁵: **G01N 35/00**, G01N 35/02, G01N 31/22

(54) **Vorrichtung zum Vereinzeln von Teststreifen.**

(30) Priorität: **30.07.86 DE 3625697**

(43) Veröffentlichungstag der Anmeldung:
**10.02.88 Patentblatt 88/06**

(45) Bekanntmachung des Hinweises auf die
Patenterteilung:
**13.05.92 Patentblatt 92/20**

(84) Benannte Vertragsstaaten:
**AT BE CH DE ES FR GB IT LI NL SE**

(56) Entgegenhaltungen:
DE-A- 2 437 332
US-A- 3 532 469

(73) Patentinhaber: **HOECHST AKTIENGESELL-
SCHAFT
Postfach 80 03 20
W-6230 Frankfurt am Main 80(DE)**

(72) Erfinder: **Sänger, Hans Dieter
Johann-Sittig-Strasse 1
W-6230 Frankfurt am Main 80(DE)**

## Beschreibung

Die Erfindung betrifft eine Vorrichtung zum Vereinzeln von Teststreifen mit mindestens einem Testfeld, wie sie z.B. für medizinische Tests, insbesondere für die Untersuchung von Harn verwendet werden. Sie ist Teil einer Linie, die dem automatischen Zuführen, Sortieren und Einlegen von Teststreifen in eine Analysenappartur, z.B. in ein Mehrkanalphonometer dient.

Für die allgemeine Harndiagnostik stehen sogenannte Mehrfachtestreifen zum Bestimmen von Bilirubin, Urobilinogen, Ketonkörper, Ascorbinsäure, Glukose, Protein, Nitrit, des pH-Wertes und Blut zur Verfügung. Derartige Teststreifen enthalten mehrere Testfelder, auf denen die jeweiligen Test zugehörenden Reagenzien als Indikator angeordnet sind. Nach der DE-A1 2437332 werden die Teststreifen in einem Vorratsbehälter in gleicher Richtung wohl geordnet gestappelt, damit sie leicht nacheinander entnommen werden können. Über eine Welle angetriebene Mitnehmer übergeben jeden einzelnen Teststreifen einer Rollentransporteinrichtung. Nachteilig bei dieser Vorrichtung ist, daß die Teststreifen wohl geordnet im Vorratsbehälter vorgelegt werden müssen. Hier will die Erfindung Abhilfe schaffen.

Die Erfindung löst die Teilaufgabe dadurch, daß ein Vorratsbehälter für die Teststreifen mit einer Öffnung versehen ist, in der eine Transporteinrichtung angeordnet ist, die mit Mitnehmern versehen ist, die die Teststreifen auf ein Leitblech übergeben, und Nocken aufweist, die einen in die Öffnung des Behälters ragenden, beweglich angeordneten Bügel auf- und abbewegen, um das Nachrutschen der Teststreifen zu gewährleisten.

Die Transporteinrichtung kann aus einer Walze mit Mitnehmern auf ihrem Mantel bestehen und die Mitnehmer können als Nocken ausgebildet sein. Auf mindestens einer der Stirnflächen der Walze können Bolzen angeordnet sein, die mit einer Klinke zusammenwirken, die mit einer Rückstelleinrichtung verbunden ist. Die Transporteinrichtung kann aber auch aus einem Transportband bestehen, das über Umlenkrollen geführt und mit Mitnehmern versehen ist. Die der Öffnung des Behälters gegenüberliegende Umlenkrolle kann die Nocken aufweisen, die mit dem in die Öffnung hineinragenden, beweglich angeordneten Bügel zusammenwirken. Durch die Nocken wird der Bügel zweckmäßig derart bewegt, daß die Teststreifen in die Öffnung rutschen und Brückenbildung vermieden wird.

Im folgenden wird die Erfindung anhand von lediglich einen Ausführungsweg darstellenden Zeichnungen näher erläutert.
Es zeigt
Figur 1     eine Seitenansicht der Vorrichtung geschnitten und
Figur 2     eine Variante der Vorrichtung gemäß Figur 1 ebenfalls in Seitenansicht geschnitten.

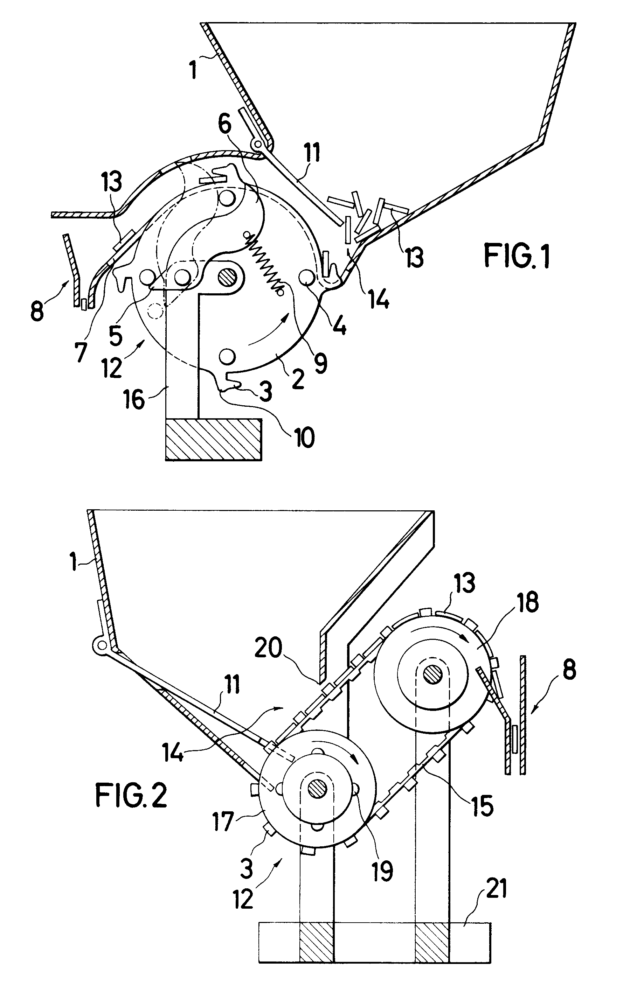

Die Vorrichtung besteht aus einem Vorratsbehälter 1 für die Teststreifen 13. Der Vorratsbehälter 1 ist mit einer Öffnung 14 versehen, die praktisch durch die Transporteinrichtung 12 verschlossen wird. In die Öffnung 14 ragt ein Bügel 11 hinein, der beweglich am Vorratsbehälter oder dergleichen angeordnet ist. Gemäß Figur 1 besteht die Transporteinrichtung 12 aus einer zylindrischen Walze 2 auf deren Mantel Mitnehmer 3 angeordnet sind. Die Mitnehmer 3 greifen sich jeweils einen Teststreifen 13 aus dem Vorratsbehälter. Um das Nachrutschen der Teststreifen zu gewährleisten und Brückenbildung untereinander zu verhindern, ist in der Öffnung ein Bügel 11 angeordnet, der mittels Nocken 10 auf und ab bewegt wird. Die Mitnehmer 3 übergeben die Teststreifen auf ein Leitblech 7, über das sie zu einer nachfolgenden Vorrichtung, z.B. in eine Führung 8 gelangen. Werden klauenförmige Mitnehmer verwendet, kann es zweckmäßig sein, eine Klinke 6 anzuordnen, um die Teststreifen vom Mitnehmer auszuwerfen, damit sie sich nicht zwischen Mitnehmer 3 und Leitblech 7 verklemmen.

Die Klinke 6 wird von Bolzen 4 angetrieben, die auf einer Stirnseite der Walze angeordnet sind. Es kann zweckmäßig sein, auf beiden Stirnseiten Klinken und Bolzen vorzusehen. Die Bolzen 4 nehmen die Klinke, die unabhängig von der Walze befestigt ist, z.B. am Lagerbock 16, an der Zunge 5 mit. Die Rückholfeder 9 bringt die Klinke in ihre Ausgangslage, sobald sie vom Bolzen 4 freigegeben ist.

Gemäß Figur 2 besteht die Transporteinrichtung 12 aus einem Transportband 15, das mit Mitnehmern 3 versehen ist. Das Transportband wird über Umlenkrollen 17, 18 geführt. Die der Öffnung 14 des Vorratsbehälters 1 gegenüberliegende Umlenkrolle 17 ist mit Nocken 19 versehen, die den Bügel 11 antreiben. Die Teststreifen 13 werden vom Transportband dem Leitblech 7 übergeben und gelangen von dort in die Führung 8. Die Kante 20 dient als Abstreifer für überflüssige Teststreifen 13. Mit 21 ist ein Lagerbock angedeutet. Der Antrieb für die Transporteinrichtung 12 kann elektrisch oder anderweitig erfolgen.

## Patentansprüche

1. Vorrichtung zum Vereinzeln von Teststreifen, dadurch gekennzeichnet, daß ein Vorratsbehälter (1) für die Teststreifen (13)) mit einer Öffnung (14) versehen ist, in der eine Transporteinrichtung (12) angeordnet ist, die mit Mitnehmern (3) versehen ist, die die Teststreifen auf ein Leitblech (7) übergeben, und Nocken (10, 19) aufweist, die einen in die Öffnung (14) des Behälters (1) ragenden, beweglich angeordneten Bügel (11) auf- und abbewegen, um das Nachrutschen der Teststreifen zu gewährleisten.

2. Vorrichtung nach Anspruch 1, dadurch gekennzeichnet, daß die Transporteinrichtung (12) aus einer Walze (2) mit Mitnehmern (3) auf ihrem Mantel besteht, und die Mitnehmer (3) als Nokken (10) ausgebildet sind.

3. Vorrichtung nach Anspruch 2, dadurch gekennzeichnet, daß auf mindestens einer der Stirnflächen der Walze (2) Bolzen (4) angeordnet sind, die mit einer Klinke (6) zusammenwirken, die mit einer Rückstelleinrichtung (9) verbunden ist, um die Teststreifen von Mitnehmer auszuweifen.

4. Vorrichtung nach Anspruch 1, dadurch gekennzeichnet, daß die Transporteinrichtung (12) aus einem Transportband (15) besteht, das mit Mitnehmern (3) versehen und über Umlenkrollen (17, 18) geführt ist und dessen der Öffnung gegenüberliegende Umlenkrolle (17) die Nokken (19) aufweist.

## Claims

1. An apparatus for the individual separation of test strips, wherein a supply container (1) for the test strips (13) is provided with an orifice (14), in which, is arranged a transport device (12) equipped with drivers (3), which transfer the test strips onto a guide plate (7), and having noses (10, 19) which move up and down a moveably arranged bar (11) projecting into the orifice (14) of the container (1), in order to ensure the descent of the test strips.

2. The apparatus as claimed in claim 1, wherein the transport device (12) comprises a roller (2) with drivers (3) on its outer surface, and the drivers (3) are designed as noses (10).

3. The apparatus as claimed in claim 2, wherein bolts (4) are arranged on at least one of the end faces of the roller (2) and interact with a pawl (6) connected to a return device (9), in order to eject the test strips from the driver.

4. The apparatus as claimed in claim 1, wherein the transport device (12) comprises a conveyor belt (15) which is equipped with drivers (3) and is guided via deflecting rollers (17, 18) and of which the deflecting roller (17) located opposite the orifice has the noses (19).

## Revendications

1. Dispositif pour délivrer individuellement des bandes d'essai, **caractérisé** en ce qu'un récipient (1) de stockage des bandes d'essai (13) est doté d'une ouverture (14) dans laquelle est disposé un convoyeur (12), qui est muni d'entraîneurs (3) transférant les bandes d'essai sur une tôle de guidage (7) et qui présente des mentonnets (10, 19) qui, afin de garantir le glissement des bandes d'essai sur le convoyeur, soulèvent et abaissent un étrier mobile (11) qui fait saillie dans l'ouverture (14) du récipient (1).

2. Dispositif selon la revendication 1, caractérisé en ce que le convoyeur (12) est constitué d'un rouleau (2) présentant des entraîneurs (3) sur son enveloppe, et les entraîneurs (3) sont réalisés sous la forme de mentonnets (10).

3. Dispositif selon la revendication 2, caractérisé en ce que des ergots (4) sont disposés sur au moins une des faces frontales du rouleau (2) et coopèrent avec un cliquet (6) qui est relié à un moyen de rappel (9) afin d'éjecter les bandes d'essai de l'entraîneur.

4. Dispositif selon la revendication 1, caractérisé en ce que le convoyeur (12) est constitué d'une bande transporteuse (15) qui est pourvue d'entraîneurs (3) et passe par des poulies de renvoi (17, 18), et dont la poulie de renvoi (17) qui se trouve en vis-à-vis de l'ouverture présente les mentonnets (19).

FIG.1

FIG.2